(19) Europäisches Patentamt
European Patent Office
Office européen des brevets

(11) **EP 2 413 026 A1**

(12) **EUROPÄISCHE PATENTANMELDUNG**

(43) Veröffentlichungstag:
**01.02.2012 Patentblatt 2012/05**

(51) Int Cl.:
*F21V 8/00* (2006.01)    *G02B 6/42* (2006.01)
*G02B 17/08* (2006.01)    *H01L 33/60* (2010.01)

(21) Anmeldenummer: **11006071.2**

(22) Anmeldetag: **25.07.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **27.07.2010 DE 102010032405**

(71) Anmelder: ZETT OPTICS GmbH
**38116 Braunschweig (DE)**

(72) Erfinder:
• **Dreher, Sabine**
**30459 Hannover (DE)**

• **Peeters, Frank**
**38124 Braunschweig (DE)**
• **Véron, Christian**
**38104 Braunschweig (DE)**
• **Korallus, Christina**
**38118 Braunschweig (DE)**

(74) Vertreter: **Plöger, Jan Manfred et al**
**Gramm, Lins & Partner GbR**
**Theodor-Heuss-Strasse 1**
**38122 Braunschweig (DE)**

(54) **Kaltlichtquelle**

(57)    Die Erfindung betrifft eine Kaltlichtquelle mit einer LED (12) zum Abgeben von Licht, einem Faserleiter (14) zum Leiten des Lichts, einem Einkoppelreflektor (16), mittels dem das Licht von der LED (12) in den Faserleiter (14) einkoppelbar ist, und einer elektronischen Steuereinheit (18), die mit der LED (12) zum Versorgen mit einem elektrischen Strom einer elektrischen Leistung verbunden ist. Erfindungsgemäß ist vorgesehen, dass der Einkoppelreflektor (16) ein radialsymmetrisches Reflektorelement (20) aufweist, das von einer Reflektorelement-Kontur ($h_{soll}(r)$) eine relative mittlere quadratische Abweichung ($A_h$) von höchstens $2,5 \cdot 10^{-3}$ aufweist, wobei die Reflektorelement-Kontur ($h_{soll}(r)$) gegeben ist durch die folgenden Punkte, wobei $r_0$ eine charakteristische Länge ist.

(fortgesetzt)

| i | $r/r_0$ | $h_{Soll}/r_0$ |
|---|---|---|
| 9 | 4,55 | 1,50 |
| 10 | 4,41 | 1,00 |
| 11 | 4,32 | 0,50 |
| 12 | 4,29 | 0,00 |

| i | $r/r_0$ | $h_{Soll}/r_0$ |
|---|---|---|
| 1 | 0,00 | 5,42 |
| 2 | 6,19 | 5,10 |
| 3 | 5,88 | 4,50 |
| 4 | 5,63 | 4,00 |
| 5 | 5,38 | 3,50 |
| 6 | 5,15 | 3,00 |
| 7 | 4,93 | 2,50 |
| 8 | 4,73 | 2,00 |

Fig. 1

EP 2 413 026 A1

**Beschreibung**

Die Erfindung betrifft eine Kaltlichtquelle mit (a) einer LED zum Abgeben von Licht, (b) einem Faserleiter zum Leiten des Lichts, (c) einem Einkoppelreflektor, mittels dem das Licht von der LED in den Faserleiter einkoppelbar ist, und (d) einer Steuereinheit, die mit der LED zum Versorgen mit einem elektrischen Strom einer elektrischen Leitung verbunden ist.

Derartige Kaltlichtquellen werden beispielsweise beim Mikroskopieren im Laborbetrieb benutzt. Eine wichtige Eigenschaft von Kaltlichtquellen ist ihre maximal erreichbare Intensität, da diese einen großen Einfluss auf die Qualität der beim Mikroskopieren erreichbaren Ergebnisse hat.

Aus der US 7,232,228 B2 ist eine gattungsgemäße Kaltlichtquelle bekannt, die zwei Reflektoren besitzt, die in Rückstrahlanordnung angeordnet sind, so dass von der LED ausgehendes Licht unter großen Winkeln reflektiert wird. Das führt zu einer relativ geringen Helligkeit.

Aus der US 5,836,667 A ist ein System zum Sammeln elektromagnetischer Strahlung bekannt, insbesondere von Licht einer Bogenlampe.

Der Erfindung liegt die Aufgabe zugrunde, eine Kaltlichtquelle mit einer besonders hohen Helligkeit anzugeben.

Die Erfindung löst das Problem durch eine gattungsgemäße Kaltlichtquelle, bei der der Einkoppelreflektor auf seiner Strahl-Austrittsseite ein radial symmetrisches Reflektorelement aufweist, das von einer Reflektorelement-Kontur $h_{soll}(r)$ eine mittlere quadratische Abweichung von höchsten $2{,}5 \cdot 10^{-3}$, insbesondere von höchstens $10^{-4}$, aufweist, wobei die Reflektorelement-Kontur gegeben ist durch die folgenden Punkte:

| i | $r/r_0$ | $h_{Soll}/r_0$ |
|---|---------|----------------|
| 1 | 0,00 | 5,42 |
| 2 | 6,19 | 5,10 |
| 3 | 5,88 | 4,50 |
| 4 | 5,63 | 4,00 |
| 5 | 5,38 | 3,50 |
| 6 | 5,15 | 3,00 |
| 7 | 4,93 | 2,50 |
| 8 | 4,73 | 2,00 |
| 9 | 4,55 | 1,50 |
| 10 | 4,41 | 1,00 |
| 11 | 4,32 | 0,50 |
| 12 | 4,29 | 0,00 |

Die relative mittlere quadratische Abweichung $A_1$ berechnet sich zu $$A_l = \sqrt{\sum_i \left( \frac{h_{ist}(r) - h_{soll}(r)}{r_0} \right)^2} \, .$$

Der Zählindex i läuft über alle in der Tabelle angege-benen Wertepaare. Die maßgebliche Abweichung ist die für diejenige charakteristische Länge $r_0$, für die die Abweichung minimal ist.

Vorteilhaft an der Kaltlichtquelle ist, dass sie einen besonders hohen Wirkungsgrad hat, das heißt, dass der Verlust an Licht, das zwar die LED verlässt, am Ende des Faserleiters jedoch nicht ankommt, besonders gering ist.

Bei der charakteristischen Länge $r_0$ handelt es sich um eine Skalierungsgröße, die beispielsweise 1 cm betragen kann. Meist ist die Skalierungsgröße größer als 2 mm und vorzugsweise kleiner als 4 cm. Vorzugsweise besitzt die LED eine Abstrahlcharakteristik, die näherungsweise einem Lambert-Strahler entspricht.

Es hat sich herausgestellt, dass es besonders günstig ist, wenn der Reflektor ein Vollmaterial-Reflektor ist, das heißt, dass das von der LED ausgehende Licht in den Reflektor eintritt und dann, wenn sein Austrittswinkel einen Akzeptanzwinkel überschreitet, reflektiert wird, bevor es in den Faserleiter eintritt. Der Reflektor kann beispielsweise aus Kunststoff gefertigt sein.

Gemäß einer bevorzugten Ausführungsform hat der Einkoppelreflektor eine, meist radial außen angeordnete, rotationssymmetrische Reflektionsstruktur, die eine Längsachse aufweist, wobei die Reflexionsstruktur eine Kontur hat, die von einer Reflexionsstruktur-Kontur $f_{soll}(x)$ eine relative mittlere quadratische Abweichung von höchstens $2{,}5 \cdot 10^{-3}$ aufweist, wobei die Abweichung wie oben beschrieben berechnet werden kann und wobei die Reflexionsstruktur gegeben ist durch die folgenden Punkte:

| i | $x/r_0$ | $f_{Soll}/r_0$ |
|---|---|---|
| 1 | 0,00 | 10,09 |
| 2 | 1,00 | 10,76 |
| 3 | 2,00 | 11,36 |
| 4 | 3,00 | 11,89 |
| 5 | 4,00 | 12,38 |
| 6 | 5,00 | 12,82 |
| 7 | 6,00 | 13,22 |
| 8 | 7,00 | 13,58 |
| 9 | 8,00 | 13,92 |
| 10 | 9,00 | 14,23 |
| 11 | 10,00 | 14,52 |
| 12 | 11,00 | 14,78 |
| 13 | 12,00 | 15,03 |
| 14 | 13,00 | 15,26 |
| 15 | 14,05 | 15,49 |
| 16 | 14,05 | 19,00 |
| 17 | 18,10 | 19,00 |

Es hat sich gezeigt, dass ein derartiger Einkoppelreflektor eine besonders hohe Lichtausbeute gestattet und damit zu einem hohen Wirkungsgrad der Kaltlichtquelle führt.

Vorzugsweise erstreckt sich der Faserleiter benachbart zum Einkoppelreflektor entlang einer Faserachse, wobei die Faserachse gegenüber der Längsachse der Reflexionsstruktur um einen Kippwinkel von zumindest 2°, insbesondere von zumindest 4°, verkippt ist. Diese Verkippung führt dazu, dass am Ende des Faserleiters die unterschiedlichen Lichtstrahlen eine solche Durchmischung erfahren haben, dass das austretende Licht sehr homogen ist. Vorzugsweise beträgt der Kippwinkel höchstens 10°.

Gemäß einer bevorzugten Ausführungsform besitzt die Kaltlichtquelle ein Bedienelement zum Einstellen einer Helligkeit der LED, wobei die Steuereinheit einen digitalen Speicher aufweist, in dem eine Kalibrierkurve hinterlegt ist, die eine vom menschlichen Auge wahrgenommene Helligkeit, insbesondere einen in den Faserleiter eingekoppelten Lichtstrom $\Phi$, der Leistungsaufnahme der LED zuordnet und wobei die Steuereinheit eingerichtet ist zum automatischen Durchführen eines Verfahrens mit den Schritten (i) Erfassen einer einzustellenden Soll-Helligkeit mittels des Bedienelements, (ii) Zuordnen einer Leistungsaufnahme zur Soll-Helligkeit anhand der Kalibrierkurve und (iii) Beaufschlagen der LED mit elektrischem Strom, so dass die Leistungsaufnahme resultiert.

Das Merkmal, dass die Kalibrierkurve die vom menschlichen Auge wahrgenommene Helligkeit der Leistungsaufnahme der LED zuordnet, kann bedeuten, dass die Kalibrierkurve eine direkte Zuordnung zwischen der Helligkeit und der Leistungsaufnahme darstellt. Es ist aber auch möglich, dass die Kalibrierkurve eine Größe, die die vom Auge wahrgenommene Helligkeit kodiert, gegen eine die Leistungsaufnahme der LED kodierende Größe aufträgt. Maßgeblich ist, dass mit dem Bedienelement eine Helligkeit gewählt werden kann und nicht wie bei bekannten Kaltlichtquellen eine Leistungsaufnahme der LED oder ein elektrischer Strom bzw. eine elektrische Spannung, die an der LED anliegen.

Gemäß einer bevorzugten Ausführungsform besitzt die Kaltlichtquelle einen Helligkeitssensor, mittels dem eine von der LED tatsächlich abgegebene Ist-Helligkeit messbar ist, wobei die Steuereinheit eingerichtet ist zum Erfassen der von dem Helligkeitssensor erfassten Leuchtstärke und zum Nachregeln des elektrischen Stroms, so dass sich die Ist-Helligkeit der Soll-Helligkeit annähert.

Unter der Helligkeit wird der objektivierte subjektive Eindruck verstanden, der von dem aus dem Faserleiter austretenden Licht hervorgerufen wird. Die Helligkeitswahrnehmung ist bei fast allen Menschen gleich, so dass sich eine objektivierbare Helligkeitsskala ermitteln lässt. Diese Helligkeitsskala hängt in der Regel logarithmisch von der Lichtstärke der LED ab. Beispielsweise ist die Steuereinheit so eingerichtet, dass sie beim kleinstmöglichen Skalenteil, beispielsweise 1%, die kleinstmögliche Leistungsaufnahme bei der LED bewirkt. Die Leistungsaufnahme wird in aller Regel digital geregelt und kann beispielsweise 1024 Stufen haben (10-Bit-Ansteuerung). Wird die Helligkeit m (in Anlehnung an Magnitude) für den kleinsten Wert, der als Beispiel als 1 % gesetzt sei, zu

$$m_{1\%} = \Phi_{v,min} \qquad \text{Formel 1}$$

gesetz, und der maximale Wert, der im Beispiel zu 100 % gesetzt sei, als

$$m_{100\%} := \Phi_{v,max} , \qquad \text{Formel 2}$$

so ergibt sich die Helligkeit $m_{x\%}$ zu

$$\text{Formel 3}$$

$$m_{x\%} = \Phi_{v,min} + \left( \frac{\Phi_{v,max} - \Phi_{v,min}}{\log_{10} \frac{\Phi_{v,max}}{\Phi_{v,min}}} \right) \log_{10} \frac{\Phi_{v,x}}{\Phi_{v,min}} .$$

Aus dieser Formel lässt sich der Lichtstrom $\Phi_v$ berechnen, den die LED bei gegebener gewünschter Helligkeit $m_{x\%}$ abzugeben hat. Der Lichtstrom $\Phi_v$ wiederum kann beispielsweise der Kalibrierkurve entnommen werden, die für jede LED spezifisch ist.

Gemäß einer bevorzugten Ausführungsform ordnet die Kalibrierkurve der vom menschlichen Auge wahrgenommenen Helligkeit die Leistungsaufnahme der LED in Abhängigkeit vom Farbort zu, wobei die Kaltlichtquelle eine Farbort-Erfassungsvorrichtung umfasst und die Steuereinheit eingerichtet ist zum Erfassen des von der Farbort-Erfassungsvorrichtung erfassten Farborts und zum Zuordnen der Leistungsaufnahme zur Helligkeit und dem Farbort anhand der Kalibrierkurve.

Bei der Farbort-Erfassungsvorrichtung kann es sich um einen Sensor handeln oder aber um eine Ansteuereinheit, mittels der eine Mehrfarben-LED angesteuert wird. Wird eine Mehrfarben-LED verwendet, so kann der Farbort eingestellt werden. Zur Bestimmung des Farborts werden dann die Werte verwendet, mit denen die Mehrfarben-LED angesteuert wird. Die vom menschlichen Auge wahrgenommene Helligkeit hängt vom Farbort ab, so dass die LED dann, wenn sie mit blauem Licht eine bestimmte Leuchtstärke hat, eine andere Helligkeitswahrnehmung hervorruft, als wenn sie bei gleicher Leuchtstärke auf einer anderen Wellenlänge strahlt. Die Kalibrierkurve enthält auch die Abhängigkeit vom Farbort, so dass der Farbort geändert werden kann, ohne dass die subjektiv empfundene Helligkeit sich ändert.

Es ist möglich, dass der Farbort über das Bedienelement eingegeben werden kann. Dazu ist die Steuerung vorzugsweise eingerichtet zum Anbieten eines Menüs, so dass der Bediener auswählen kann, ob er mit dem Bedienelement die Helligkeit oder den Farbort einstellen möchte. Es ist aber selbstverständlich auch möglich, eine Farbort-Einstellvorrichtung vorzusehen, beispielsweise einen zweidimensional verschiebbaren Regler, so dass der Farbort direkt durch Positionieren eines Bedienelements einstellbar ist.

Vorzugsweise ist die Steuerung eingerichtet zum Erfassen einer Kamera-Kennung, wobei die Kalibrierkurve eine kameraspezifische Korrektur aufweist, so dass die Kalibrierkurve der vom menschlichen Auge wahrgenommenen Helligkeit eines Kamerabilds die Leistungsaufnahme der LED, insbesondere in Abhängigkeit vom Farbort, zuordnet. Des Weiteren ist die Steuereinheit eingerichtet zum Zuordnen der Leistungsaufnahme zur Helligkeit anhand der Kamera-Kennung und insbesondere auch zum Farbort, anhand der Kalibrierkurve. Es ist möglich, dass die Kamera-Kennung in einem interaktiven Menü abgefragt wird. Es ist aber auch möglich, dass die Kaltlichtquelle, beispielsweise über eine Schnittstelle, mittels eines Eingabegeräts ansteuerbar ausgebildet ist, so dass über das Eingabegerät, beispielsweise einen Rechner, die Kennung für die Kamera eingegeben werden kann. Es ist auch möglich, das die Steuerung so eingerichtet sein kann, dass verschiedene Kalibrierkurven über die Schnittstelle von dem externen Rechner aufgespielt werden können.

Gemäß einer bevorzugten Ausführungsform besitzt die Kaltlichtquelle eine Schnittstelle zur Kommunikation mit einem Rechner, insbesondere eine USB-oder CAN-Bus- und/oder RS232- und/oder Bluetooth-Schnittstelle, wobei das Bedienelement einen Inkrementalgeber aufweist und wobei die Steuereinheit eingerichtet ist zum Erfassen von Änderungen der Stellung des Bedienelements, zum Ermitteln der Stellung aus einer Folge von Änderungen und einer Startstellung und/oder einer über die Schnittstelle empfangenen Ausgangsstellung. Auf diese Weise kann die Kaltlichtquelle sowohl über die Schnittstelle als auch manuell und im Mischbetrieb bedient werden. Es ist möglich, zunächst über die Schnittstelle eine Ausgangsstellung vorzugeben, beispielsweise die höchstmögliche Helligkeit. Nachfolgend kann mit dem Bedienelement die Helligkeit heruntergeregelt werden. Wird danach ein weiterer Helligkeitswert über die Schnittstelle als Ausgangsstellung gesetzt, so kann mittels des Bedienelements die Helligkeit erneut reduziert werden. Da es sich um einen Inkrementalgeber handelt, gibt es keine niedrigste Stellung, so dass der Fall ausgeschlossen ist, dass eine per Schnittstelle vorgegebene Ausgangsstellung mit dem Inkrementalgeber nicht wie gewünscht verändert werden kann.

Vorzugsweise ist der Farbort der LED regelbar. Das hat den Vorteil, dass Beleuchtungsprogramme durchfahren werden können, die mehrere Farborte umfassen.

Vorzugsweise ist die Steuereinheit eingerichtet zum Speichern zumindest einer Folge von Helligkeiten und/ oder zugehörigen Farborten, zum Erfassen eines Steuerbefehls, der eine Soll-Helligkeit und/oder einen Soll-Farbort anhand der Position in der Folge kodiert, und zum Ansteuern der LED mit elektrischem Strom, so dass Licht mit der Soll-Helligkeit und/oder dem Soll-Farbort abgegeben wird. Das ermöglicht es, vorgegebene Helligkeits- und/oder Farbort-Programme zu speichern, so dass Reihenuntersuchungen unter stets gleichen Bedingungen möglich sind. Besonders günstig ist es dann, wenn das Erfassen des Steuerbefehls, der die Soll-Helligkeit anhand ihrer Position in der Helligkeits-Folge kodiert, ein Auslesen des Inkrementalgebers umfasst. In anderen Worten lässt sich durch Betätigen des Inkrementalgebers innerhalb der vorgegebenen Folge an Helligkeit oder Farborten navigieren.

Vorzugsweise ist die Steuereinheit eingerichtet zum Erfassen einer Benutzerkennung, mittels der ein Benutzer der Kaltlichtquelle identifizierbar ist, wobei die Folge von Helligkeiten und/oder zugehörigen Farborten mit der Benutzerkennung verknüpft ist. Es ist dann möglich, dass jeder Benutzer seine individuelle Folge an Helligkeiten und/oder Farborten eingibt, was das Arbeiten mit der Kaltlichtquelle deutlich beschleunigen kann.

Im Folgenden wird die Erfindung anhand der beigefügten Zeichnungen näher erläutert. Dabei zeigt

Figur 1      eine erfindungsgemäße Kaltlichtquelle in einer schematischen Ansicht,

Figur 2a      eine Detailansicht des Einkoppelreflektors,

Figur 2b      eine bemaßte Ansicht des Einkoppelreflektors und

Figur 3      eine Kalibrierkurve, mittels der eine einzustellende Soll-Helligkeit auf eine Ansteuergröße für die Leistungsaufnahme zurückgeführt werden kann.

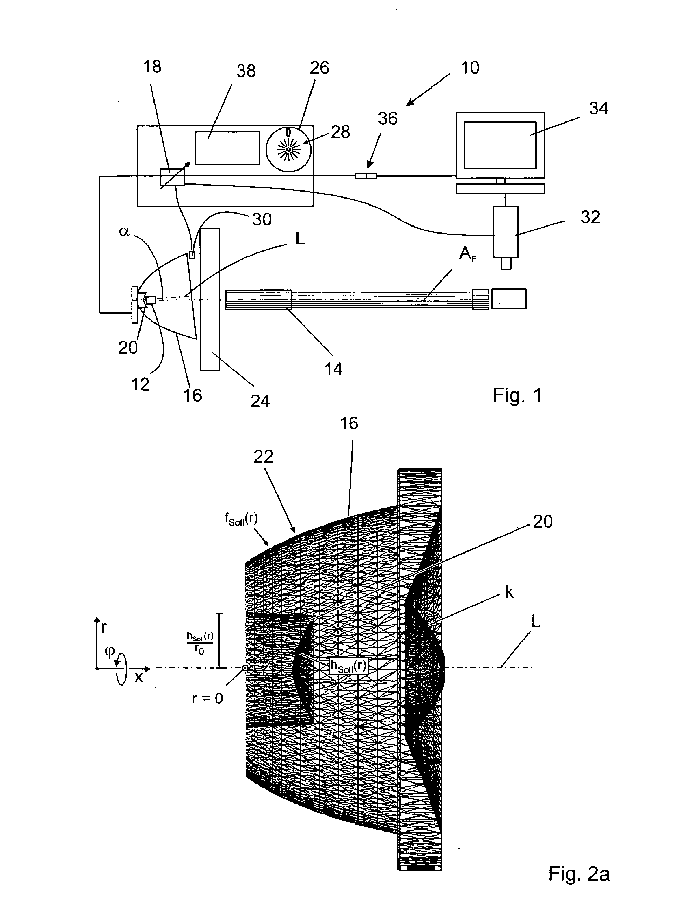

Figur 1 zeigt eine erfindungsgemäße Kaltlichtquelle 10 mit einer LED 12, einem Faserleiter 14, einem Einkoppelreflektor 16 und einer Steuereinheit 18.

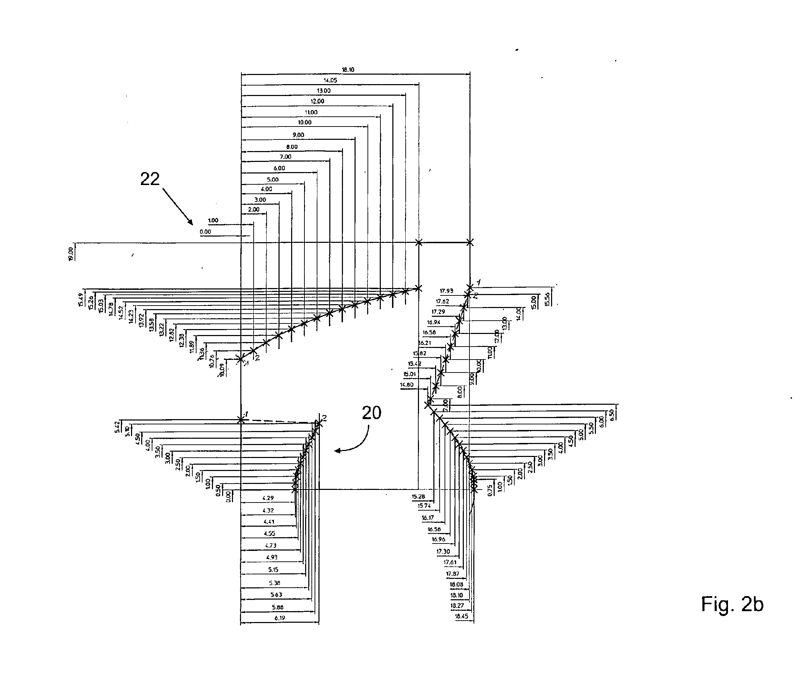

Figur 2a zeigt den Einkoppelreflektor 16 im Detail. Es ist zu erkennen, dass der Einkoppelreflektor ein radialsymmetrisches Reflektorelement 20 aufweist, dessen Kontur durch die im Folgenden tabellierten Werte angegeben ist. Zwischenstellen können beispielsweise durch eine Spline-Interpolation mit Polynomen dritten Grades, beispielsweise über vier Stützstellen, berechnet werden. Figur 2b ist eine bemaßte Ansicht von Figur 2a.

Der Einkoppelreflektor 16 besitzt zudem eine rotationssymmetrische Reflexionsstruktur 22, die die Längsachse L mit dem gesamten Reflektor teilt, die gleichzeitig die optische Achse ist. Die Reflexionsstruktur hat eine Kontur, die durch die Reflexionsstruktur $f_{soll(x)}$ gegeben ist. Diese Funktion ist in Figur 2b aufgetragen. Die Reflexionsstruktur 22 kann beispielsweise durch eine Grenzfläche, an der Totalreflexion aufgrund des Brechungsindexunterschieds zwischen Reflektormaterial und Umgebung auftritt, oder durch eine Metallisierung auf dem Außenrand des Reflektorelements 20 gebildet sein.

Figur 1 zeigt, dass sich der Faserleiter 14 benachbart zum Einkoppelreflektor 16 entlang einer Faserachse $A_f$ erstreckt. Der Einkoppelreflektor ist mit seiner Längsachse L um einen Kippwinkel $\alpha$ gegen die Faserachse $A_F$ verkippt. Der Kippwinkel $\alpha$ kann beispielsweise 4° betragen. Zwischen dem Einkoppelreflektor 16 und dem Faserleiter 14 ist eine Filtereinheit 24 angeordnet, in die optische Filter einsetzbar sind.

Figur 1 zeigt, dass die Kaltlichtquelle 10 ein Bedienelement 26 zum Einstellen einer Helligkeit der LED 12 besitzt. Im vorliegenden Fall ist das Bedienelement 26 durch einen Drehknopf gebildet, der einen schematisch eingezeichneten Inkrementalgeber 28 umfasst. Der Inkrementalgeber 28 funktioniert so, dass jedes Mal dann, wenn das Bedienelement 26 um einen vorgegebenen Winkelbetrag gedreht wurde, ein Zählimpuls an die Steuereinheit 18 abgegeben wird. Aus der Zahl der Zählimpulse in eine bestimmte Drehrichtung errechnet die Steuereinheit 18 die Position des Bedienelements 26 und daraus die eingestellte Helligkeit $m_{Soll}$.

Die Steuereinheit 18 besitzt einen digitalen Speicher, in dem eine Kalibrierkurve abgelegt ist. Die Kalibrierkurve $K: m \rightarrow P$ ordnet jeder Helligkeit m einer Leistungsaufnahme P der LED 12 zu. Das kann direkt geschehen, indem die Helligkeitswerte m gegen die Leistungsaufnahme P aufgetragen sind, es ist aber auch möglich, dies wie im Folgenden impliziert zu tun.

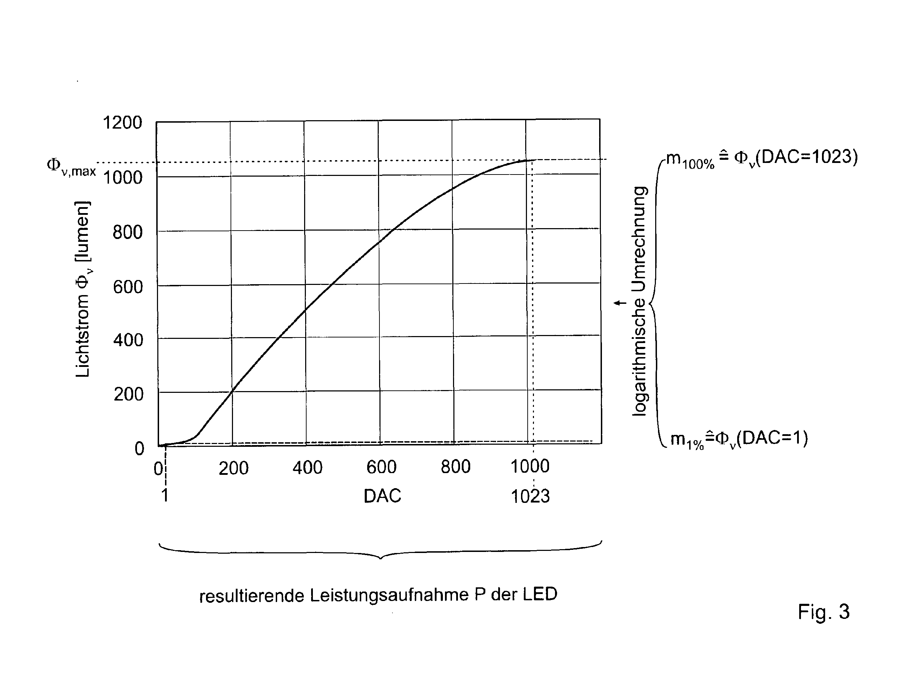

Figur 3 zeigt rechts schematisch eine Skala für die Helligkeit m von 1 % bis 100 %. Es handelt sich dabei um die von einer Person wahrgenommene Helligkeit. Die Wahl von 100 Skalenteilen ist willkürlich, es sind auch mehr oder weniger Skalenteile möglich.

Anhand der oben angegebenen Formel 3 wird die Helligkeit m in den Lichtstrom $\Phi_v$ umgerechnet. Anhand der links stehenden Grafik wird entsprechend die Helligkeit in die Ansteuer-Bits DAC umgerechnet. DAC bedeutet dabei die Bit-Zahl, mittels der ein interner Verstärker der Steuereinheit 18 angesteuert wird. Es ist zu erkennen, dass der Lichtstrom $\Phi_v$ nicht linear von der Ansteuerung des internen Verstärkers abhängt. Die Kalibrierkurve ist die Zuordnung von m oder einer dazu korrespondierenden Größe wie der Stellung des Bedienelements zu P oder DAC oder einer weiteren zu dieser korrespondierenden Größe.

Beim Betrieb wird mit dem Bedienelement 26 die Helligkeit eingestellt. Die Steuereinheit 18 errechnet daraus die Ansteuerung an den internen Verstärker in Form der DAC, so dass die eingestellte Helligkeit $m_{soll}$ resultiert.

Figur 1 zeigt schematisch einen Helligkeitssensor 30, mittels dem die von der LED 12 tatsächlich abgegebene Ist-Helligkeit $m_{ist}$ messbar ist. Die Steuereinheit 18 erfasst diese Ist-Helligkeit $m_{ist}$ und regelt den elektrischen Strom I, im vorliegenden Fall durch Einstellen bzw. Ändern des DAC-Werts an einer nicht eingezeichneten internen digitalen Stromquelle so nach, dass sich die daraus folgende Ist-Helligkeit $m_{ist}$ der Soll-Helligkeit $m_{soll}$ annähert, die der Einstellung des Bedienelements 26 entspricht.

Der Helligkeitssensor 30 kann zudem Farbort-Erfassungsvorrichtung sein, so dass nicht nur die Helligkeit, sondern auch der Farbort des von der LED 12 ausgehenden Lichts gemessen werden kann. Selbstverständlich misst der Helligkeitssensor 30 nicht an jedem Winkel die Leuchtstärke der LED 12. Durch eine vorangehende Kalibrierung ist jedoch sichergestellt, dass der Helligkeitssensor 30 einen Messwert aufnimmt, der die Leuchtstärke der LED 12 charakterisiert.

Figur 1 zeigt zudem schematisch eingezeichnet eine Kamera 32, die mit einem ebenfalls schematisch eingezeichneten Rechner 34 verbunden ist. Die Kamera kann beispielsweise mit einem nicht eingezeichneten Mikroskop verbunden sein, bei dem der Faserleiter 14 einen Objektträger beleuchtet. Die Kamera 32 ist über eine Leitung mit der Steuereinheit 18 verbunden. Die Steuereinheit 18 ist eingerichtet zum Erfassen einer Kamera-Kennung, das heißt zum Erfassen von Daten, die die Kamera hinsichtlich ihrer optischen Eigenschaften charakterisiert. Anhand der so erfassten Daten werden die Helligkeit und/oder der Farbort so gewählt, dass die Helligkeit auf einem von der Kamera 32 aufgenommenen Bild der eingestellten Helligkeit entspricht. Ist die Kamera beispielsweise so ausgebildet, dass sie bei geringeren Helligkeiten Bilder mit einer überproportional hohen Helligkeit produziert, so regelt die Steuerung die Helligkeit bei entsprechend niedrig eingestellter Helligkeit herunter, so dass im Ergebnis das von der Kamera hergestellte Bild die gewünschte Helligkeit hat.

Die Kaltlichtquelle 10 ist über eine schematisch eingezeichnete Schnittstelle 36 mit dem Rechner 34 verbunden. Unter der Schnittstelle 36 wird dabei eine Vorrichtung verstanden, die so ausgebildet ist, dass ein Senden und Empfangen von Informationen zum und vom Rechner möglich ist. Es kann sich dabei auch um eine Punktschnittstelle handeln. Zur Schnittstelle gehört auch eine entsprechende Treibervorrichtung, mittels der Signale generiert werden, die mit dem Rechner ausgetauscht oder empfangen werden.

Figur 1 zeigt zudem, dass die Kaltlichtquelle 10 eine Anzeige 38 besitzt, die auch als Display oder Bildschirm bezeichnet werden könnte. Über die Anzeige kann einem Benutzer ein Dialogmenü angezeigt werden. Alternativ oder zusätzlich ist es auch möglich, dass auf dem Rechner 34 eine Software laufen kann, mit der die Einstellungen der Kaltlichtquelle 10 einstellbar sind. Beispielsweise sind Programme für eine Vielzahl von Helligkeiten einstellbar. So ist die Steuereinheit 18 ausgebildet zum Speichern einer Folge m(i) an Helligkeiten, wobei i ein Zählindex ist mit i = 1, 2, 3, .... Beispielsweise durch Bedienen des Bedienelements 26 kann von einem Element der Folge, beispielsweise die Helligkeit m(1) zur Helligkeit m(2) gewechselt werden. Es ist auch möglich, dass die Helligkeit frei einstellbar ist, was auch über den Rechner geschehen kann. Dazu sendet der Rechner 34 über die Schnittstelle 36 ein Signal, das die Steuereinheit 18 dazu veranlasst, eine bestimmte Helligkeit $m_{soll}$ anzugeben. Möchte der Benutzer diese Helligkeit per Hand ändern, so kann er das Bedienelement 26 verwenden. Bedient er das Bedienelement, so ändert sich die vorher eingestellte Helligkeit $m_{soll}$. Das ermöglicht eine kombinierte Bedienung mittels Rechner und per Hand.

**Bezugszeichenliste**

10 Kaltlichtquelle

12 LED

14   Faserleiter

16   Einkoppelreflektor

18   Steuereinheit

20   Reflektorelement

22   Reflexionsstruktur

24   Filtereinheit

26   Bedienelement

28   Inkrementalgeber

30   Helligkeitssensor, Farbortsensor

32   Kamera

34   Rechner

36   Schnittstelle

38   Anzeige

$\alpha$   Kippwinkel

A   Abweichung

$A_F$   Faserachse

k   Stirnseitenkontur

L   Längsachse

m   Helligkeit

P   Leistungsaufnahme

$r_0$   charakteristische Länge

**Patentansprüche**

1.   Kaltlichtquelle mit

(a) einer LED (12) zum Abgeben von Licht,
(b) einem Faserleiter (14) zum Leiten des Lichts,
(c) einem Einkoppelreflektor (16), mittels dem das Licht von der LED (12) in den Faserleiter (14) einkoppelbar ist, und
(d) einer elektronischen Steuereinheit (18), die mit der LED (12) zum Versorgen mit einem elektrischen Strom einer elektrischen Leistung verbunden ist,
**dadurch gekennzeichnet, dass**
(e) der Einkoppelreflektor (16) ein radialsymmetrisches Refklektorelement (20) aufweist, das von einer Reflektorelement-Kontur ($h_{soll}(r)$) eine relative mittlere quadratische Abweichung ($A_h$) von höchstens 2,5 10⁻³ aufweist, wobei die Reflektorelement-Kontur ($h_{soll}(r)$) gegeben ist durch die folgenden Punkte, wobei ro eine charakteristische Länge ist.

| i | r/r_0 | h_soll/r_0 |
|---|---|---|
| 1 | 0,00 | 5,42 |
| 2 | 6,19 | 5,10 |
| 3 | 5,88 | 4,50 |
| 4 | 5,63 | 4,00 |
| 5 | 5,38 | 3,50 |
| 6 | 5,15 | 3,00 |
| 7 | 4,93 | 2,50 |
| 8 | 4,73 | 2,00 |
| 9 | 4,55 | 1,50 |
| 10 | 4,41 | 1,00 |
| 11 | 4,32 | 0,50 |
| 12 | 4,29 | 0,00 |

**2.** Kaltlichtquelle nach einem der vorstehenden Ansprüche, **dadurch gekennzeichnet, dass**

- der Einkoppelreflektor (16) eine rotationssymmetrische Reflexionsstruktur (22) aufweist, die eine Längsachse (L) aufweist,
- wobei die Reflexionsstruktur (22) eine Kontur hat, die von einer Reflexionsstruktur-Kontur ($f_{soll}(x)$) eine relative mittlere quadratische Abweichung ($A_f$) von höchstens 2,5 $10^{-3}$ aufweist, wobei die Reflexionsstruktur-Kontur ($f_{soll}(x)$) gegeben ist durch die folgenden Punkte:

| i | x/r_0 | f_Soll/r_0 |
|---|---|---|
| 1 | 0,00 | 10,09 |
| 2 | 1,00 | 10,76 |
| 3 | 2,00 | 11,36 |
| 4 | 3,00 | 11,89 |
| 5 | 4,00 | 12,38 |
| 6 | 5,00 | 12,82 |
| 7 | 6,00 | 13,22 |
| 8 | 7,00 | 13,58 |
| 9 | 8,00 | 13,92 |
| 10 | 9,00 | 14,23 |
| 11 | 10,00 | 14,52 |
| 12 | 11,00 | 14,78 |
| 13 | 12,00 | 15,03 |
| 14 | 13,00 | 15,26 |
| 15 | 14,05 | 15,49 |
| 16 | 14,05 | 19,00 |
| 17 | 18,10 | 19,00 |

3. Kaltlichtquelle nach einem der vorstehenden Ansprüche, **dadurch gekennzeichnet, dass** der Einkoppelreflektor (16) auf seiner Lichtaustrittsseite eine Kontur hat, die von einer Stirnseitenkontur (k) eine relative mittlere quadratische Abweichung ($A_k$) von höchstens $2,5 \cdot 10^{-3}$ aufweist, wobei die Stirnseitenkontur (k) gegeben ist durch die folgenden Punkte:

| i | $x/r_0$ | $r/r_0$ |
|---|---------|---------|
| 1 | 18,10 | 15,65 |
| 2 | 17,93 | 15,00 |
| 3 | 17,62 | 14,00 |
| 4 | 17,29 | 13,00 |
| 5 | 16,94 | 12,00 |
| 6 | 16,58 | 11,00 |
| 7 | 16,21 | 10,00 |
| 8 | 15,82 | 9,00 |
| 9 | 15,42 | 8,00 |
| 10 | 15,01 | 7,00 |
| 11 | 14,80 | 6,50 |
| 12 | 15,28 | 6,00 |
| 13 | 15,74 | 5,50 |
| 14 | 16,17 | 5,00 |
| 15 | 16,58 | 4,50 |
| 16 | 16,96 | 4,00 |
| 17 | 17,30 | 3,50 |
| 18 | 17,61 | 3,00 |
| 19 | 17,87 | 2,50 |
| 20 | 18,08 | 2,00 |
| 21 | 18,10 | 1,50 |
| 22 | 18,27 | 1,00 |
| 23 | 18,45 | 0,75 |

4. Kaltlichtquelle nach einem der vorstehenden Ansprüche, **dadurch gekennzeichnet, dass**

   - der Faserleiter (14) sich benachbart zum Einkoppelreflektor (16) entlang einer Faserachse ($A_F$) erstreckt,
   - wobei die Faserachse ($A_F$) gegenüber der Längsachse (L) der Reflexionsstruktur (22) um einen Kippwinkel ($\alpha$) von zumindest 2° verkippt ist.

5. Kaltlichtquelle nach einem der vorstehenden Ansprüche, **gekennzeichnet durch**

   (f) ein Bedienelement (26) zum Einstellen einer Helligkeit (m) der LED (12),
   (g) wobei die Steuereinheit (18)

   - einen digitalen Speicher aufweist, in dem eine Kalibrierkurve hinterlegt ist, die eine vom menschlichen Auge wahrgenommene Helligkeit (m), insbesondere einen in den Faserleiter (14) eingekoppelten Lichtstrom, der Leistungsaufnahme der LED (12) oder einer dazu äquivalenten Größe zuordnet und
   - eingerichtet ist zum automatischen Durchführen eines Verfahrens mit den Schritten

Erfassen einer einzustellenden Soll-Helligkeit ($m_{Soll}$) mittels des Bedienelements (26),
Zuordnen einer Leistungsaufnahme (P) zur Soll-Helligkeit ($m_{Soll}$) anhand der Kalibrierkurve und
Beaufschlagen der LED (12) mit elektrischem Strom, so dass die Leistungsaufnahme (P) resultiert.

6. Kaltlichtquelle nach einem der vorstehenden Ansprüche, **gekennzeichnet durch**

   - einen Helligkeitssensor (30), mittels dem eine von der LED (12) tatsächlich abgegebene Ist-Helligkeit ($m_{ist}$) messbar ist,
   - wobei die Steuereinheit (18) eingerichtet ist zum Erfassen der von dem Helligkeitssensor (30) erfassten Leuchtstärke und
   Nachregeln des elektrischen Stroms, so dass sich die Ist-Helligkeit ($m_{ist}$) der Soll-Helligkeit ($m_{Soll}$) annähert.

7. Kaltlichtquelle nach einem der vorstehenden Ansprüche, **dadurch gekennzeichnet, dass**

   - die Kalibrierkurve
   der vom menschlichen Auge wahrgenommenen Helligkeit (m) die Leistungsaufnahme der LED (12) in Abhängigkeit vom Farbort zuordnet, wobei
   - die Kaltlichtquelle (10) eine Farbort-Erfassungsvorrichtung (30) umfasst und
   - die Steuereinheit (18) eingerichtet ist zum Erfassen des von der Farbort-Erfassungsvorrichtung erfassten Farborts und zum Zuordnen der Leistungsaufnahme zur Helligkeit (m) und zum Farbort anhand der Kalibrierkurve.

8. Kaltlichtquelle nach einem der vorstehenden Ansprüche, **dadurch gekennzeichnet, dass**

   - die Steuerung eingerichtet ist zum Erfassen einer Kamera-Kennung
   und
   - die Kalibrierkurve eine kameraspezifische Korrektur aufweist, so dass die Kalibrierkurve der vom menschlichen Auge wahrgenommenen Helligkeit (m) eines Kamerabilds die Leistungsaufnahme der LED (12), insbesondere in Abhängigkeit vom Farbort, zuordnet,
   - wobei die Steuereinheit (18) eingerichtet ist zum Zuordnen der Leistungsaufnahme zur Helligkeit (m) anhand der Kamera-Kennung und insbesondere auch zum Farbort, anhand der Kalibrierkurve.

9. Kaltlichtquelle nach einem der vorstehenden Ansprüche, **gekennzeichnet durch**

   - eine Schnittstelle (36) zur Kommunikation mit einem Rechner (34), insbesondere eine USB- und/oder CAN-Bus- und/oder RS232-und/oder Bluetooth-Schnittstelle (36),
   - wobei das Bedienelement (26) einen Inkrementalgeber (28) aufweist
   und
   - wobei die Steuereinheit (18) eingerichtet ist zum Erfassen von Änderungen der Stellung des Bedienelements (26) und
   Ermitteln der Stellung aus
   einer Folge von Änderungen und
   einer Startstellung und/oder einer über die Schnittstelle (36) empfangenen Ausgangsstellung.

10. Kaltlichtquelle nach einem der vorstehenden Ansprüche, **dadurch gekennzeichnet, dass** die Steuereinheit (18) eingerichtet ist zum

    - Speichern zumindest einer Folge von Helligkeiten (m) und/oder zugehörigen Farborten,
    - Erfassen eines Steuerbefehls, der eine Soll-Helligkeit (m) anhand ihrer Position in der Folge kodiert, und
    - Ansteuern der LED (12) mit elektrischem Strom, so dass Licht mit der Soll-Helligkeit und/oder dem Soll-Farbort abgegeben wird.

11. Kaltlichtquelle nach Anspruch 10, **dadurch gekennzeichnet, dass** die Steuereinheit (18) eingerichtet ist zum

    - Erfassen einer Benutzerkennung, mittels der ein Benutzer der Kaltlichtquelle identifizierbar ist,
    - wobei die Folge von Helligkeiten (m) und/oder zugehörigen Farborten mit der Benutzerkennung verknüpft ist.

Fig. 1

Fig. 2a

Fig. 2b

Fig. 3

Europäisches
Patentamt

European
Patent Office

Office européen
des brevets

## EUROPÄISCHER RECHERCHENBERICHT

Nummer der Anmeldung

EP 11 00 6071

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2004/155565 A1 (HOLDER RONALD G [US] ET AL) 12. August 2004 (2004-08-12) * Absätze [0056] - [0059] * * Absätze [0065] - [0067] * * Abbildungen 5,8a,8b,9 * ----- | 1-11 | INV. F21V8/00 G02B6/42 ADD. G02B17/08 H01L33/60 |
| X | JP 8 018107 A (IWASAKI ELECTRIC CO LTD) 19. Januar 1996 (1996-01-19) * Zusammenfassung; Abbildungen * * Absätze [0002], [0016] * ----- | 1-11 | |
| X,D | US 7 232 228 B2 (LI KENNETH K [US]) 19. Juni 2007 (2007-06-19) * Spalte 5, Zeilen 7-20 * * Abbildungen 1,2A-2D,10 * ----- | 1-11 | |
| X | DE 199 40 207 A1 (KANO TETSUHIRO [DE]) 22. März 2001 (2001-03-22) * Spalte 5, Zeilen 41-65 * * Abbildungen 1-3 * ----- | 1-11 | |
| A | DE 10 2008 001778 A1 (VISTEON GLOBAL TECH INC [US]) 27. November 2008 (2008-11-27) * Abbildungen 1,3 * ----- | 1 | RECHERCHIERTE SACHGEBIETE (IPC) F21V G02B H01L |
| A | US 4 747 660 A (NISHIOKA KIMIHIKO [JP] ET AL) 31. Mai 1988 (1988-05-31) * Spalte 2, Zeile 36 - Spalte 3, Zeile 5 * * Abbildungen 4-8 * ----- | 4 | |

Der vorliegende Recherchenbericht wurde für alle Patentansprüche erstellt

| Recherchenort | Abschlußdatum der Recherche | Prüfer |
|---|---|---|
| Den Haag | 1. November 2011 | Kloppenburg, Martin |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

EP 2 413 026 A1

**ANHANG ZUM EUROPÄISCHEN RECHERCHENBERICHT**
**ÜBER DIE EUROPÄISCHE PATENTANMELDUNG NR.**   EP 11 00 6071

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-11-2011

| Im Recherchenbericht angeführtes Patentdokument | Datum der Veröffentlichung | Mitglied(er) der Patentfamilie | Datum der Veröffentlichung |
|---|---|---|---|
| US 2004155565 A1 | 12-08-2004 | WO 2004073353 A2 | 26-08-2004 |
| JP 8018107 A | 19-01-1996 | KEINE | |
| US 7232228 B2 | 19-06-2007 | AU 2002258851 A1 | 05-11-2002 |
| | | CA 2444092 A1 | 31-10-2002 |
| | | CN 1555509 A | 15-12-2004 |
| | | EP 1417537 A2 | 12-05-2004 |
| | | EP 1918773 A1 | 07-05-2008 |
| | | HK 1071442 A1 | 06-03-2009 |
| | | JP 4295991 B2 | 15-07-2009 |
| | | JP 2005507086 A | 10-03-2005 |
| | | KR 20080083367 A | 17-09-2008 |
| | | MX PA03009764 A | 30-06-2004 |
| | | TW 578030 B | 01-03-2004 |
| | | WO 02086617 A2 | 31-10-2002 |
| | | US 2003063261 A1 | 03-04-2003 |
| | | US 2005073653 A1 | 07-04-2005 |
| DE 19940207 A1 | 22-03-2001 | KEINE | |
| DE 102008001778 A1 | 27-11-2008 | US 2008291683 A1 | 27-11-2008 |
| US 4747660 A | 31-05-1988 | JP 60123818 A | 02-07-1985 |

Für nähere Einzelheiten zu diesem Anhang : siehe Amtsblatt des Europäischen Patentamts, Nr.12/82

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7232228 B2
- US 5836667 A